# EUROPEAN PATENT SPECIFICATION

(11) **EP 1 369 016 B1**
(45) Date of publication and mention of the grant of the patent: **05.09.2007**
(21) Application number: 03076534.1
(22) Date of filing: 21.05.2003
(51) Int. Cl.: A01B 79/00

(54) **An assembly for performing an agricultural operation, in particular crop processing**
Bausatz zum Ausführen einer landwirtschaftlichen Bearbeitung insbesondere Gewächsbearbeitung
Assemblage pour exécuter une opération agricole en particulier sur une récolte

(30) Priority: 06.06.2002 NL 1020807
(43) Date of publication of application: 10.12.2003
(73) Proprietor: Lely Enterprises AG, 6300 ZUG (CH)
(72) Inventor: Van den Berg, Karel, 2971 BR Bleskensgraaf (NL); Miedema, Theo Jan, 2678 KZ De Lier (NL)
(74) Representative: Corten, Maurice Jean F.M.

(56) References cited:
- DE-A- 10 016 688
- NL-C- 1 014 174
- US-A- 2 902 098
- US-A- 5 870 689
- US-A1- 2002 049 522
- US-B1- 6 236 916

## Description

The invention relates to an assembly for performing an agricultural operation, in particular crop processing, according to the preamble of claim 1 (see e.g. US-A-2002/049522).

Such an assembly is known from DE-A-10016688. This document discloses a device for determining birds' nests and for making a map of them. The device can be mounted on an agricultural machine of any kind, and the data from the device are used for example for automatically stopping the agricultural machine.

The invention aims at providing an alternative assembly.

For this purpose, according to the invention, an assembly for performing an agricultural operation, in particular crop processing, of the above-described type comprises the features of the characterizing part of claim 1. Such a molehill masher may be constituted by the wheels of the agricultural machine, whereas the molehill disperser may be constituted for example by a mowing-unit or the like that is disposed on the agricultural machine. In this manner, it is not necessary constantly to take into account molehills that are present on the agricultural parcel when performing the operation on the agricultural parcel.

The invention will be explained hereinafter in further detail with reference to embodiments shown in the drawing, in which:

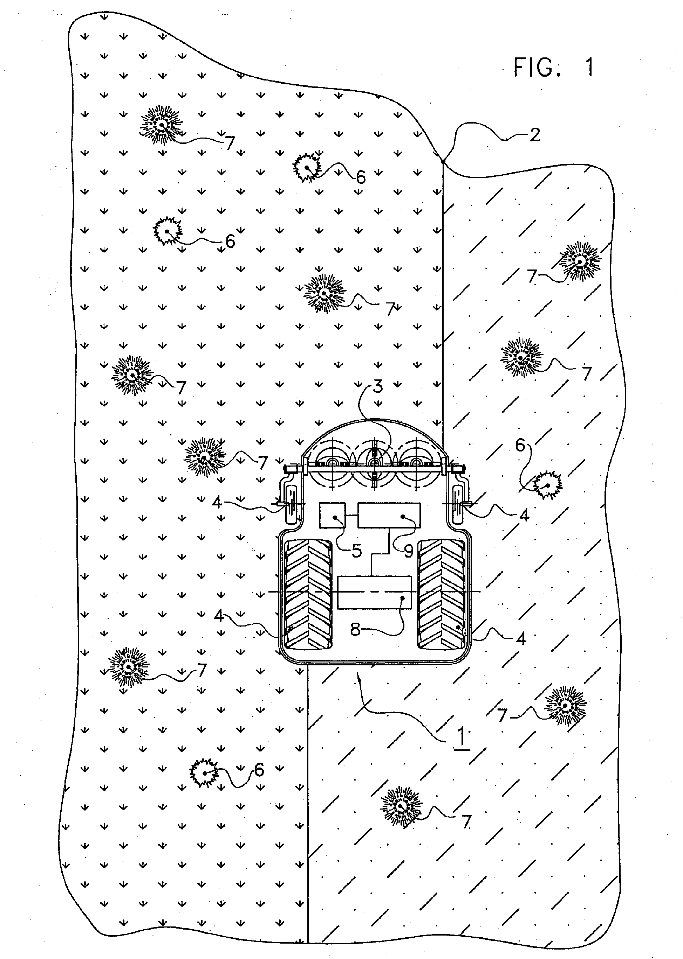

Figure 1 shows schematically in plan view an autonomous agricultural machine in an agricultural parcel in an embodiment of an assembly according to the invention.

Figure 1 shows schematically in plan view an autonomous agricultural machine 1 in an agricultural parcel 2 in an embodiment of the invention. It is pointed out here that an autonomous machine, i.e. a machine that does not require a driver for being moved, is known per se and will not be set out here in further detail for the sake of simplicity of the description. The autonomous agricultural machine 1 is suitable for performing an agricultural operation on the agricultural parcel 2. In the embodiment shown the autonomous agricultural machine 1 is an autonomous mowing machine that mows crop that is present on the agricultural parcel 2 by means of a mowing-unit 3 known per se. Although several sorts of mowing-units known per se may be used, in the embodiment shown the mowing-unit 3 is constituted by mowing discs that are present on a cutter bar and are rotatable about an axis, which mowing discs are provided with mowing knives. It will be obvious that the agricultural machine can also be an agricultural machine for performing other crop-processing operations.

The agricultural machine 1 is supported and moved over the agricultural parcel 2 by means of wheels 4.

The agricultural machine 1 further comprises a position-determining element 5 known per se for determining the position of the autonomous agricultural machine 1 in the agricultural parcel 2 by means of for example a GPS-system. Said position-determining element 5 may also be used as direction-of-travel-determining element for determining the direction of travel of the agricultural machine 1. In the present case the position-determining element is connected to a control-unit 8 with a memory 9 suitable for containing information with respect to the agricultural parcel 2, such as information with respect to the positions of birds' nests 6 and molehills 7 in the agricultural parcel 2. Said information may for example be stored in the form of a ground plan in which the parts 6, 7 of the agricultural parcel 2 are indicated; this can take place for example by regularly checking the agricultural parcel for such animal traces. This makes it possible, when the agricultural machine 1 approaches such an animal trace 6, 7, to take relevant movement measures.

In the case of molehills the autonomous agricultural machine can be controlled by the control-unit 8 in such a way that the wheels 4 drive the molehill flat.

It will be obvious that it is also possible for the control-unit to be disposed in a separate position and to control the agricultural machine by means of remote-control.

## Claims

1. An assembly for performing an agricultural operation, in particular crop processing, which assembly is provided with an autonomous agricultural machine (1) that is movable over a parcel for performing the agricultural operation, with a position-determining system (5) for determining the momentary position of the agricultural machine (1) in the parcel, and with a control-unit (8) for controlling the functioning of the autonomous agricultural machine (1), which control-unit (8) is provided with a memory (9) containing animal traces data, the control-unit (8) being adapted to control the functioning of the autonomous agricultural machine (1) with the aid of the animal traces data, **characterized in that** the autonomous agricultural machine (1) is provided with a molehill masher and/or molehill disperser, said control-unit (8) being adapted to control said molehill masher and/or molehill disperser to flatten and/or disperse the molehill.

## Patentansprüche

1. Vorrichtung zum Durchführen einer landwirtschaftlichen Arbeit, insbesondere Gutaufbereitung, wobei die Vorrichtung versehen ist mit einer autonomen landwirtschaftlichen Maschine (1), die zum Durchführen der landwirtschaftlichen Arbeit über eine Parzelle bewegbar ist, mit einem Positionsermittlungssystem (5) zum Ermitteln der momentanen Position der landwirtschaftlichen Maschine (1) innerhalb der Parzelle und mit einer Steuereinheit (8) zum Steuern der Funktion der autonomen landwirtschaftlichen Maschine (1), wobei die Steuereinheit (8) mit einem Speicher (9) versehen ist, der Tierspurendaten enthält, wobei die Steuereinheit (8) geeignet ist, die Funktion der autonomen landwirtschaftlichen Maschine (1) mit Hilfe der Tierspurendaten zu steuern,
**dadurch gekennzeichnet, dass** die autonome landwirtschaftliche Maschine (1) mit einem Maulwurfshügel-Planierer und/oder Maulwurfshügel-Verteiler versehen ist, wobei die Steuereinheit (8) geeignet ist, den Maulwurfshügel-Planierer und/oder Maulwurfshügel-Verteiler derart zu steuern, dass der Maulwurfshügel planiert und/oder verteilt wird.

## Revendications

1. Assemblage pour réaliser une opération agricole, en particulier le traitement de récolte, ledit assemblage accompagne une machine agricole autonome (1) qui peut se déplacer sur une parcelle afin de réaliser l'opération agricole, doté d'un système de détermination de position (5) afin de déterminer la position en temps réel de la machine agricole (1) dans la parcelle, et d'une unité de commande (7) pour commander le fonctionnement de la machine agricole autonome (1), ladite unité de commande (8) est dotée d'une mémoire (9) qui contient les données concernant les traces animales, l'unité de commande (8) étant adaptée pour commander le fonctionnement de la machine agricole autonome (1) à l'aide des données sur les traces animales, **caractérisé en ce que** la machine agricole autonome (1) est dotée d'un écraseur et/ou d'un disperseur de taupinière, ladite unité de commande (8) étant adaptée pour commander ledit écraseur et/ou disperseur de taupinière afin d'aplatir et/ou de disperser la taupinière.
